# EUROPÄISCHE PATENTSCHRIFT

(11) **EP 3 395 502 B1**
(45) Veröffentlichungstag und Bekanntmachung des Hinweises auf die Patenterteilung: **09.02.2022**
(21) Anmeldenummer: 18159182.7
(22) Anmeldetag: 28.02.2018
(51) Int. Cl.: B24D 5/10, B23D 47/00

(54) **TRÄGERKÖRPER FÜR EIN SCHLEIF- ODER EIN SCHNEIDWERKZEUG**
SUPPORTING BODY FOR A GRINDING OR A CUTTING TOOL
CORPS SUPPORT POUR UN OUTIL DE MEULAGE OU DE COUPE

(30) Priorität: 14.03.2017 AT 502012017
(43) Veröffentlichungstag der Anmeldung: 31.10.2018
(73) Patentinhaber: Tyrolit - Schleifmittelwerke Swarovski K.G., 6130 Schwaz (AT)
(72) Erfinder: GRÜNDHAMMER, Martin, 6200 Jenbach (AT)
(74) Vertreter: Torggler & Hofinger Patentanwälte

(56) Entgegenhaltungen:
- EP-A1- 2 810 739
- DE-A1- 2 521 678
- DE-A1- 3 720 435
- DE-U1- 8 915 764

## Beschreibung

Die Erfindung betrifft einen Trägerkörper für ein Schleif- oder ein Schneidwerkzeug, umfassend einen zentralen Koppelbereich zur Anbindung des Schleif- oder Schneidwerkzeugs an einen Drehantrieb zum Drehen des Schleif- oder Schneidwerkzeugs um eine durch den Koppelbereich verlaufende Drehachse, eine sich in radialer Richtung daran anschließende Trägerstruktur, wobei die Trägerstruktur vom Koppelbereich gesonderte Ausnehmungen aufweist, und zwei im Wesentlichen kreisringförmige Seitenflächen, die in axialer Richtung über die Trägerstruktur voneinander beabstandet sind, und wobei zumindest ein Teil der, vorzugsweise alle, Ausnehmungen nur zu einer der Seitenflächen des Trägerkörpers hin geöffnet sind. Die Erfindung betrifft weiterhin ein Schleif- oder ein Schneidwerkzeug mit einem solchen Trägerkörper und einem an oder auf dem Trägerkörper angeordneten Schleifmittel.

Ein Trägerkörper ist beispielsweise aus der EP 2 810 739 bekannt. Dabei sind in der Trägerstruktur Ausnehmungen angeordnet, welche als Durchführungen ausgebildet sind. Mit dieser Ausgestaltung soll ein Trägerkörper mit einem besonders geringen Gewicht erzielt werden. Allerdings hat man dabei festgestellt, dass die Durchführungen zu einer unerwünschten Geräuschentwicklung und bei Einsatz eines Kühlmediums durch Verwirbelung und Ablenkung des Kühlmediums zu negativen Einflüssen auf die Laufeigenschaften, z.B. Unwucht, führen. Um diese Nachteile zu beheben, werden die Durchführungen beidseitig mit Abdeckelementen verschlossen.

Die Herstellung des Trägerkörpers ist allerdings sehr aufwendig, da der Trägerkörper in einem ersten Arbeitsschritt mit Durchführungen versehen, in einem zweiten Arbeitsschritt ein erstes Abdeckelement auf die eine Seite der Durchführungen und schließlich in einem dritten Arbeitsschritt ein weiteres Abdeckelement auf die andere Seite der Durchführungen aufgebracht werden muss.

Das Aufbringen der Abdeckelemente selber ist ebenfalls sehr aufwendig, da einerseits nur eine Verklebung im Innenbereich des Trägerkörpers erfolgt und andererseits in radialer Richtung ein Spalt zum Mantelkörper geschaffen wird. Beide Maßnahmen erfordern eine hohe Präzision bei der Verarbeitung. Darüber hinaus kann sich in den Spalten zwischen den Abdeckelementen und dem Mantelkörper abgetragenes Material ansammeln und so die Schleifeigenschaften signifikant beeinträchtigen. Durch den Spalt besteht sogar die Gefahr, dass bei Einsatz eines Kühlmediums sich das Kühlmedium in den Durchführungen ansammelt und es dadurch zu einer Unwucht des Trägerkörpers kommt.

Die DE 2521678 A1, auf der der Oberbegriff des Anspruchs 1 basiert, und die DE 3720435 A1 zeigen Trägerkörper mit Ausnehmungen, welche zumindest gemäß einigen Ausführungsformen nur zu einer der Seitenflächen des Trägerkörpers hin geöffnet sind. Dabei geht es primär darum, Schallemissionen zu reduzieren. Die Trägerkörper sind allerdings nicht für den Einsatz eines Kühlmediums geeignet.

Die Aufgabe der vorliegenden Erfindung besteht darin, einen gegenüber dem Stand der Technik verbesserten Trägerkörper, der sich insbesondere einfacher und kostengünstiger herstellen lässt und eine erhöhte Lebensdauer bei im Wesentlichen gleich bleibenden Schleifeigenschaften aufweist und sich gleichzeitig für den Einsatz eines Kühlmediums eignet sowie ein gegenüber dem Stand der Technik verbessertes Schleif- oder Schneidwerkzeug mit einem solchen Trägerkörper anzugeben.

Diese Aufgabe wird durch die Merkmale der Ansprüche 1 und 14 gelöst.

Der Trägerkörper weist einseitige Ausnehmungen auf, die beispielsweise durch Fräsen oder Bohren hergestellt werden können, wozu nur ein Arbeitsschritt notwendig ist. Diese asymmetrische Ausbildung der Ausnehmungen reicht aus, um die Geräuschentwicklungen deutlich zu reduzieren.

Die Asymmetrie hat keine nachteiligen Auswirkungen auf die Laufeigenschaften des Trägerkörpers bzw. eines damit hergestellten Schleif- oder Schneidwerkzeugs.

Eine asymmetrische Ausbildung der Ausnehmungen hätte ein Fachmann bei der EP 2 810 739 nicht in Erwägung gezogen, da in dieser Schrift explizit darauf hingewiesen wird, dass die Radialelastizität des Trägerkörpers durch einen vollständigen Verschluss der Durchführungen verloren geht. Im Vergleich dazu hat es sich herausgestellt, dass die Radialelastizität bei der einseitigen Öffnung der Ausnehmungen in einem ausreichenden Maß erhalten bleibt.

Erfindungsgemäß ist es nun vorgesehen, dass die Ausnehmungen an der Seitenfläche, zu welcher die Ausnehmungen hin geöffnet sind, durch eine gemeinsame, vorzugsweise kreisringförmige, Abdeckung abgedeckt sind. Hierdurch kann man sich die durch die asymmetrische Ausbildung der Ausnehmungen erzielten Vorteile auch bei Trägerkörpern zunutze machen, bei denen ein Kühlmedium eingesetzt werden soll, ohne dass es zu einer Verwirbelung des Kühlmediums kommt.

Gemäß einer bevorzugten Ausführungsform ist es vorgesehen, dass die Ausnehmungen zu derselben Seitenfläche des Trägerkörpers hin geöffnet sind. Dies ist insofern vorteilhaft, da der Trägerkörper zur Herstellung der Ausnehmungen nur von einer Seite bearbeitet werden muss.

Weiterhin hat es sich als günstig erwiesen, dass die Ausnehmungen an der Seitenfläche, welche der Seitenfläche, zu welcher die Ausnehmungen hin geöffnet sind, gegenüber liegt, durch eine Seitenwand, welche einstückig mit der Trägerstruktur verbunden ist, verschlossen sind, vorzugsweise wobei in axialer Richtung die Seitenwand eine Dicke von 0,3 % bis 15 %, vorzugsweise ca. 10 %, der Dicke des Trägerkörpers aufweist.

Der Einsatz eines Kühlmediums kann durch die in den abhängigen Ansprüchen 6 bis 8 definierten Maßnahmen weiter verbessert werden. Durch diese Maßnahmen, entweder allein oder in Kombination miteinander, ist es möglich, sich die durch die asymmetrische Ausbildung der Ausnehmungen erzielten Vorteile auch bei Trägerkörpern zunutze zu machen, bei denen ein Kühlmedium eingesetzt werden soll, ohne dass es zu einer Verwirbelung des Kühlmediums kommt.

Weitere besonders vorteilhafte Ausführungsformen sind in den abhängigen Ansprüchen 9 bis 13 enthalten.

Wie eingangs ausgeführt, wird Schutz auch begehrt für ein Schleif- oder Schneidwerkzeug mit einem erfindungsgemäßen Trägerkörper und einem an oder auf dem Trägerkörper angeordneten Schleifmittel, vorzugsweise wobei der Trägerkörper eine Umfangsfläche aufweist und das Schleifmittel in Form eines Schleifbelags an der Umfangsfläche des Trägerkörpers angeordnet ist.

Bei dem Schleifmittel kann es sich beispielsweise um CBN oder Diamant handeln. Der Schleifbelag kann mit herkömmlichen Bindungssystemen an der Umfangsfläche aufgebracht sein, zum Beispiel durch eine galvanische Belegung, oder durch aufgeklebte oder angelötete Schleifsegmente mit keramischer Bindungsmatrix, oder Kunstharz- oder Metallbindung.

Weitere Einzelheiten und Vorteile der Erfindung werden anhand der Figurenbeschreibung unter Bezugnahme auf die Zeichnungen im Folgenden näher erläutert. Dabei zeigt:
- Fig. 1a: einen Trägerkörper für ein Schleif- oder Schneidwerkzeug gemäß einem ersten bevorzugten Ausführungsbeispiel in einer Draufsicht auf eine Seitenfläche,
- Fig. 1b: den Trägerkörper gemäß Fig. 1a in einer Draufsicht auf die gegenüberliegende Seitenfläche,
- Fig. 2: den Trägerkörper gemäß den Fig. 1a und 1b in einer Querschnittsansicht entlang der in der Fig. 1a eingezeichneten Querschnittsebene 27,
- Fig. 3: einen Trägerkörper für ein Schleif- oder Schneidwerkzeug gemäß einem zweiten bevorzugten Ausführungsbeispiel in einer Querschnittsansicht,
- Fig. 4: einen Trägerkörper für ein Schleif- oder Schneidwerkzeug gemäß einem dritten bevorzugten Ausführungsbeispiel in einer Querschnittsansicht, und
- Fig. 5: ein Schleif- oder Schneidwerkzeug mit einem Trägerkörper gemäß einem fünften bevorzugten Ausführungsbeispiel und einem Schleifmittel in einer Querschnittsansicht.

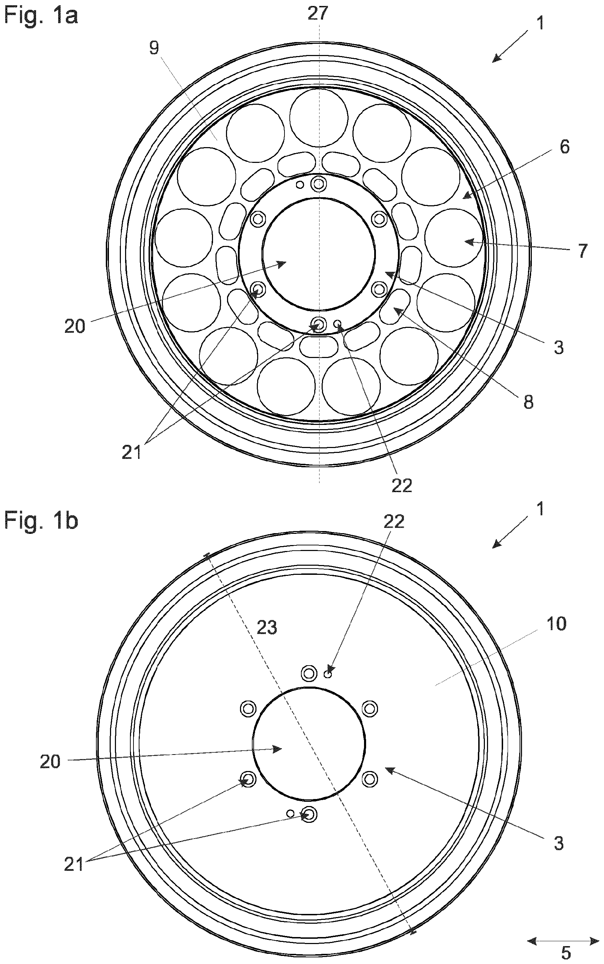

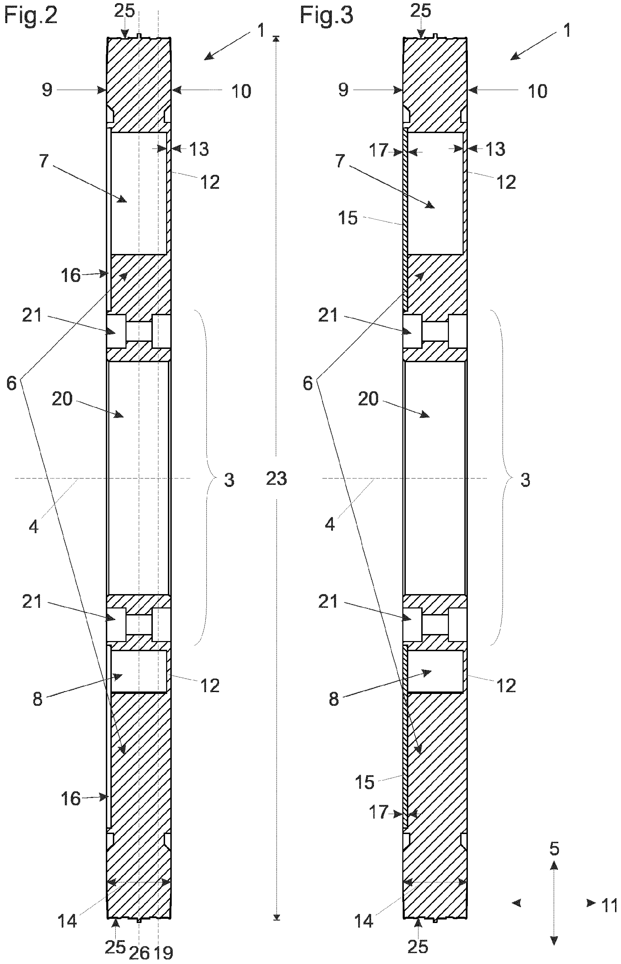

Der in den Figuren 1a, 1b und 2 dargestellte Trägerkörper 1 für ein Schleif- oder ein Schneidwerkzeug umfasst einen zentralen Koppelbereich 3 zur Anbindung des mit dem Trägerkörper 1 gebildeten Schleif- oder Schneidwerkzeugs an einen Drehantrieb zum Drehen des Schleif- oder Schneidwerkzeugs um eine durch den Koppelbereich 3 verlaufende Drehachse 4. Dabei kann der Koppelbereich 3 eine zentrale Durchführung 20 aufweisen, welche beispielsweise eine antreibbare Spindel aufnehmen kann. Zur drehfesten Verbindung des Schleif- oder Schneidwerkzeugs mit dem Drehantrieb können ergänzend Mittel 21, 22 vorgesehen sein, welche benachbart zur Durchführung 20 angeordnet sind. Bei den Mitteln 21, 22 kann es sich beispielsweise um Durchführungen zur Aufnahme von Schrauben oder dergleichen handeln.

In radialer Richtung 5 schließt sich an den Koppelbereich 3 eine Trägerstruktur 6 an. Die Trägerstruktur 6 weist vom Koppelbereich 3 gesonderte Ausnehmungen 7, 8 auf. Die Ausnehmungen 7, 8 können ganz unterschiedliche Querschnittsformen aufweisen. Im Falle des in den Figuren 1a, 1b und 2 dargestellten Trägerkörpers 1 weisen die Ausnehmungen 7 in einer Querschnittsebene 19 normal zur Drehachse 4 einen kreisförmigen Querschnitt auf. Die Ausnehmungen 8 weisen einen langlochförmigen Querschnitt auf.

Der Trägerkörper 1 umfasst weiterhin zwei im Wesentlichen kreisringförmige Seitenflächen 9, 10, die in axialer Richtung 11 über die Trägerstruktur 6 voneinander beabstandet sind. Fasst man den Trägerkörper 1 als Kreiszylinder mit zwei Zylinderdeckflächen und einer Mantelfläche auf, so sind die Seitenflächen 9, 10 Bestandteil der Zylinderdeckflächen.

Die Ausnehmungen 7, 8 sind nur zu einer der Seitenflächen 9, 10 des Trägerkörpers 1 hin geöffnet. Genauer gesagt sind die Ausnehmungen 7, 8 zu derselben Seitenfläche, nämlich der mit dem Bezugszeichen 9 versehenen Seitenfläche, des Trägerkörpers 1 hin geöffnet.

An der Seitenfläche 10, welche der Seitenfläche 9, zu welcher die Ausnehmungen 7, 8 hin geöffnet sind, gegenüber liegt, sind die Ausnehmungen 7, 8 durch eine Seitenwand 12, welche einstückig mit der Trägerstruktur 6 verbunden ist, verschlossen. Das bedeutet, dass man bei einer Draufsicht auf auf die Seitenfläche 10 des Trägerkörpers 1 nur durch die Durchführungen 20, 21, 22 hindurch sehen kann. Ansonsten stellt sich der Trägerkörper 1 als ein im Wesentlichen geschlossene Fläche dar.

Als vorteilhaft hat es sich erwiesen, dass die Seitenwand 12 in axialer Richtung 11 eine Dicke 13 von 0,3 % bis 15 % der Dicke 14 des Trägerkörpers 1 aufweist. Im dargestellten Fall weist die Seitenwand 12 eine Dicke 13 in axialer Richtung 11 von ca. 10 % der Dicke 14 des Trägerkörpers 1 auf.

Um das Gewicht der Trägerkörpers 1 möglichst gering zu halten und gleichzeitig eine ausreichende Stabilität zu erzielen, bietet es sich an, dass die Ausnehmungen 7, 8 an der Seitenfläche 9, zu welcher die Ausnehmungen 7, 8 hin geöffnet sind, eine Gesamtfläche von 50 % bis 90 % einnehmen. In dem dargestellten Fall nehmen die Ausnehmungen 7, 8 an dieser Seitenflächen 9 eine Gesamtfläche von ca. 75 % der Seitenfläche 9 ein.

Bezogen auf die Mittelebene 26 normal zur Drehachse 4 ist der Trägerkörper 1 asymmetrisch ausgebildet. Dies unterscheidet ihn wesentlich von den aus dem Stand der Technik bekannten Trägerkörpern.

Der erfindungsgemäße Aufbau des Trägerkörpers 1 spielt seine Vorteile insbesondere bei Trägerkörpern mit einem vergleichsweise großen Durchmessern von 250 mm bis 700 mm aus. Im dargestellten Fall weist der Trägerkörper 1 einen Durchmesser 23 von ca. 400 mm auf.

Die Dicke 14 des Trägerkörpers 1 in axialer Richtung 11 kann beispielsweise 20 mm bis 300 mm betragen. Im dargestellten Fall weist der Trägerkörper 1 eine Dicke 14 in axialer Richtung 11 von ca. 30 mm auf.

Das Ausführungsbeispiel gemäß Figur 3 unterscheidet sich von dem Ausführungsbeispiel gemäß den Figuren 1a, 1b und 2 dadurch, dass die Ausnehmungen 7, 8 an der Seitenfläche 9, zu welcher die Ausnehmungen 7, 8 hin geöffnet sind, durch eine kreisringförmige Abdeckung 15 abgedeckt sind. Diese Abdeckung 15 dient dazu, eine Verwirbelungen eines zur Kühlung des Trägerkörpers 1 eingesetzten Kühlmediums zu verhindern. Außerdem reduziert die Abdeckung 15 noch weiter die Lärmentwicklung im Schleif- oder Schneideinsatz. Zudem werden Verwirbelungen der Luft vermieden.

Die Abdeckung 15 ist auf die Seitenfläche 9, zu welcher die Ausnehmungen 7, 8 hin geöffnet sind, aufgeklebt. Im Vergleich zum Stand der Technik liegt eine Verklebung an jeder Stelle, an welcher die Abdeckung 15 die Seitenfläche 9 kontaktiert, vor. Auf diese Weise können die Ausnehmungen 7, 8 zuverlässig abgedeckt werden.

Die Seitenfläche 9, zu welcher die Ausnehmungen 7, 8 hin geöffnet sind, weist eine Aussparung 16 auf, welche eine der Abdeckung 15 korrespondierende Form aufweist. Das bedeutet, dass die Ausnehmung 16 im dargestellten Fall ebenfalls kreisringförmig ist.

Die Abdeckung 15 ist in dieser Aussparung 16 im Wesentlichen spaltfrei eingesetzt. Auch dieser Umstand stellt einen Unterschied zum Stand der Technik dar, bestand doch ein Vorurteil darin, dass man einen Spalt zum Mantelkörper lassen müsse, um die Radialelastizität des Trägerkörpers 1 sicherzustellen.

In axialer Richtung 11 kann die Abdeckung 15 eine Dicke 17 von 0,3 % bis 15 % der Dicke 14 des Trägerkörpers 1 aufweisen. Im konkret dargestellten Fall weist die Abdeckung 15 in axialer Richtung 11 eine Dicke 17 von ca. 10 % der Dicke 14 des Trägerkörpers 1 auf.

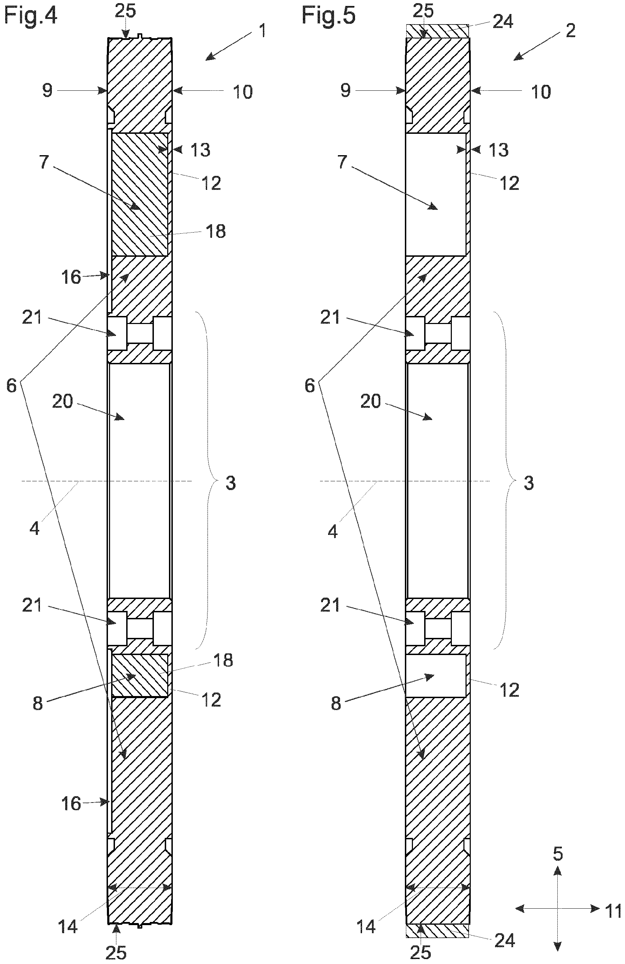

Das in der Figur 4 dargestellte Ausführungsbeispiel unterscheidet sich von dem in der Figur 3 dargestellten Ausführungsbeispiel darin, dass die Ausnehmungen 7, 8 mit einem Füllstoff 18, in Form von Kunstharz, ausgefüllt sind. Dieser Füllstoff 18 hat im Wesentlichen dieselbe Funktion, wie die Abdeckung 15, welche beim Ausführungsbeispiel gemäß Figur 3 zum Einsatz kommt.

Figur 5 zeigt ein Schleifwerkzeug 2, welches einen Trägerkörper aufweist, wobei der Trägerkörper eine Umfangsfläche 25 umfasst. An der Umfangsfläche 25 ist ein Schneidmittel 24 in Form eines Schleifbelags angeordnet. Der Trägerkörper ist im Wesentlichen wie der Trägerkörper 1 gemäß den Figuren 1a, 1b und 2 ausgebildet, mit dem Unterschied, dass keine Ausnehmung 16 vorgesehen ist. Ein weiterer Unterschied besteht darin, dass die Umfangsfläche 25 glatt ausgebildet ist. Die Form der Umfangsfläche 25 ist aber beliebig, und kann je nach Anwendungsfall unterschiedlich gewählt werden.

Grundsätzlich sei noch darauf hingewiesen, dass die Merkmale der Ausnehmung 16, der Abdeckung 15 und des Füllstoffs 18 beliebig miteinander kombiniert werden können.

## Patentansprüche

1. Trägerkörper (1) für ein Schleif- oder ein Schneidwerkzeug (2), umfassend einen zentralen Koppelbereich (3) zur Anbindung des Schleif- oder Schneidwerkzeugs (2) an einen Drehantrieb zum Drehen des Schleif- oder Schneidwerkzeugs (2) um eine durch den Koppelbereich (3) verlaufende Drehachse (4), eine sich in radialer Richtung (5) daran anschließende Trägerstruktur (6), wobei die Trägerstruktur (6) vom Koppelbereich (3) gesonderte Ausnehmungen (7, 8) aufweist, und zwei im Wesentlichen kreisringförmige Seitenflächen (9, 10), die in axialer Richtung (11) über die Trägerstruktur (6) voneinander beabstandet sind, und wobei zumindest ein Teil der, vorzugsweise alle, Ausnehmungen (7, 8) nur zu einer der Seitenflächen (9, 10) des Trägerkörpers (1) hin geöffnet sind, **dadurch gekennzeichnet, dass** die Ausnehmungen (7, 8) an der Seitenfläche (9), zu welcher die Ausnehmungen (7, 8) hin geöffnet sind, durch eine gemeinsame, vorzugsweise kreisringförmige, Abdeckung (15) abgedeckt sind.

2. Trägerkörper (1) nach Anspruch 1, wobei die Ausnehmungen (7, 8) zu derselben Seitenfläche (9) des Trägerkörpers (1) hin geöffnet sind.

3. Trägerkörper (1) nach Anspruch 1 oder 2, wobei die Ausnehmungen (7, 8) an der Seitenfläche (10), welche der Seitenfläche (9), zu welcher die Ausnehmungen (7, 8) hin geöffnet sind, gegenüber liegt, durch eine Seitenwand (12), welche einstückig mit der Trägerstruktur (6) verbunden ist, verschlossen sind.

4. Trägerkörper (1) nach Anspruch 3, wobei in axialer Richtung (11) die Seitenwand (12) eine Dicke (13) von 0,3 % bis 15 %, vorzugsweise ca. 10 %, der Dicke (14) des Trägerkörpers (1) aufweist.

5. Trägerkörper (1) nach einem der Ansprüche 1 bis 4, wobei die Abdeckung (15) eine größeren Teil der Seitenfläche (9) einnimmt als die Ausnehmungen (7, 8), und/oder die Abdeckung (15) auf die Seitenfläche (9), zu welcher die Ausnehmungen (7, 8) hin geöffnet sind, aufgeklebt ist, vorzugsweise wobei an jeder Stelle, an welcher die Abdeckung (15) die Seitenfläche (9) kontaktiert, eine Verklebung vorliegt.

6. Trägerkörper (1) nach einem der Ansprüche 1 bis 5, wobei die Seitenfläche (9), zu welcher die Ausnehmungen (7, 8) hin geöffnet sind, eine Aussparung (16) aufweist, welche eine der Abdeckung (15) korrespondierende Form aufweist, und die Abdeckung (15) in die Aussparung (16) im Wesentlichen spaltfrei eingesetzt ist.

7. Trägerkörper (1) nach einem der Ansprüche 1 bis 6, wobei in axialer Richtung (11) die Abdeckung (15) eine Dicke (17) von 0,3 % bis 15 %, vorzugsweise ca. 10 %, der Dicke (14) des Trägerkörpers (1) aufweist.

8. Trägerkörper (1) nach einem der Ansprüche 1 bis 7, wobei die Ausnehmungen (7, 8) zumindest bereichsweise, vorzugsweise vollständig, mit einem Füllstoff (18), vorzugsweise Kunstharz, ausgefüllt sind.

9. Trägerkörper (1) nach einem der Ansprüche 1 bis 8, wobei die Ausnehmungen (7, 8) in einer Querschnittsebene (19) normal zur Drehachse (4) einen kreisförmigen oder langlochförmigen Querschnitt aufweisen.

10. Trägerkörper (1) nach einem der Ansprüche 1 bis 9, wobei die Ausnehmungen (7, 8) an der Seitenfläche (9), zu welcher die Ausnehmungen (7, 8) hin geöffnet sind, eine Gesamtfläche von 50 % bis 90 %, vorzugsweise ca. 75 %, der Seitenfläche (9) einnehmen.

11. Trägerkörper (1) nach einem der Ansprüche 1 bis 10, wobei der Koppelbereich (3) eine zentrale Durchführung (20), und vorzugsweise Mittel (21, 22) zur drehfesten Verbindung des Schleif- oder Schneidwerkzeugs (2) mit dem Drehantrieb aufweist, wobei die Mittel (21, 22) zur drehfesten Verbindung benachbart zur Durchführung (20) angeordnet sind.

12. Trägerkörper (1) nach einem der Ansprüche 1 bis 11, wobei der Trägerkörper (1) einen Durchmesser (23) von 250 mm bis 700 mm, vorzugsweise ca. 400 mm, und/oder eine Dicke (14) in axialer Richtung (11) von 20 mm bis 300 mm, vorzugsweise ca. 30 mm, aufweist.

13. Trägerkörper (1) nach einem der Ansprüche 1 bis 12, wobei der Trägerkörper (1) bezogen auf eine Mittelebene (26) normal zur Drehachse (4) asymmetrisch ausgebildet ist.

14. Schleif- oder Schneidwerkzeug (2) mit einem Trägerkörper (1) nach einem der Ansprüche 1 bis 13 und einem an oder auf dem Trägerkörper (1) angeordneten Schleifmittel (24), vorzugsweise wobei der Trägerkörper (1) eine Umfangsfläche (25) aufweist und das Schleifmittel (24) in Form eines Schleifbelags an der Umfangsfläche (25) des Trägerkörpers (1) angeordnet ist.

## Claims

1. Carrier body (1) for a grinding or a cutting tool (2), comprising a central coupling area (3) for connecting the grinding or cutting tool (2) to a rotary drive for rotating the grinding or cutting tool (2) about an axis of rotation (4) passing through the coupling area (3), a carrier structure (6) adjacent thereto in the radial direction (5), wherein the carrier structure (6) has recesses (7, 8) separate from the coupling area (3), and two substantially annular side surfaces (9, 10) which are spaced apart from each other in the axial direction (11) across the carrier structure (6), and wherein at least some, preferably all, of the recesses (7, 8) are open only to one of the side surfaces (9, 10) of the carrier body (1), **characterized in that** the recesses (7, 8) are covered on the side surface (9), to which the recesses (7, 8) are open, by a common, preferably annular, cover (15).

2. Carrier body (1) according to claim 1, wherein the recesses (7, 8) are open to the same side surface (9) of the carrier body (1).

3. Carrier body (1) according to claim 1 or 2, wherein the recesses (7, 8) are sealed on the side surface (10) which is opposite the side surface (9), to which the recesses (7, 8) are open, by a side wall (12) which is connected to the carrier structure (6) in one piece.

4. Carrier body (1) according to claim 3, wherein, in the axial direction (11), the side wall (12) has a thickness (13) of from 0.3 % to 15 %, preferably approx. 10 %, of the thickness (14) of the carrier body (1).

5. Carrier body (1) according to one of claims 1 through 4, wherein the cover (15) occupies a larger portion of the side surface (9) than the recesses (7, 8), and/or the cover (15) is bonded to the side surface (9), to which the recesses (7, 8) are open, preferably wherein there is a bonding at every point at which the cover (15) contacts the side surface (9).

6. Carrier body (1) according to one of claims 1 through 5, wherein the side surface (9), to which the recesses (7, 8) are open, has a cut-out (16), which has a shape corresponding to the cover (15), and the cover (15) is inserted into the cut-out (16) substantially without gaps.

7. Carrier body (1) according to one of claims 1 through 6, wherein, in the axial direction (11), the cover (15) has a thickness (17) of from 0.3 % to 15 %, preferably approx. 10 %, of the thickness (14) of the carrier body (1).

8. Carrier body (1) according to one of claims 1 through 7, wherein the recesses (7, 8) are filled, at least in areas, preferably completely, with a filler material (18), preferably synthetic resin.

9. Carrier body (1) according to one of claims 1 through 8, wherein the recesses (7, 8) have a circular or slotted hole-shaped cross section in a cross-sectional plane (19) normal to the axis of rotation (4).

10. Carrier body (1) according to one of claims 1 through 9, wherein the recesses (7, 8) on the side surface (9), to which the recesses (7, 8) are open, occupy a total area of from 50 % to 90 %, preferably approx. 75 %, of the side surface (9).

11. Carrier body (1) according to one of claims 1 through 10, wherein the coupling area (3) has a central lead-through (20), and preferably means (21, 22) for the torque-proof connection of the grinding or cutting tool (2) to the rotary drive, wherein the means (21, 22) for the torque-proof connection are arranged neighbouring the lead-through (20).

12. Carrier body (1) according to one of claims 1 through 11, wherein the carrier body (1) has a diameter (23) of from 250 mm to 700 mm, preferably approx. 400 mm, and/or a thickness (14) in the axial direction (11) of from 20 mm to 300 mm, preferably approx. 30 mm.

13. Carrier body (1) according to one of claims 1 through 12, wherein the carrier body (1) is formed asymmetrically relative to a centre plane (26) normal to the axis of rotation (4).

14. Grinding or cutting tool (2) with a carrier body (1) according to one of claims 1 through 13 and an abrasive material (24) arranged in or on the carrier body (1), preferably wherein the carrier body (1) has a peripheral surface (25) and the abrasive material (24) is arranged in the form of an abrasive layer on the peripheral surface (25) of the carrier body (1).

## Revendications

1. Corps porteur (1) pour outil abrasif ou coupant (2), comprenant une zone d'accouplement (3) centrale destinée à raccorder l'outil abrasif ou coupant (2) à un entraînement rotatif pour faire tourner l'outil abrasif ou coupant (2) autour d'un axe de rotation (4) traversant la zone d'accouplement (3), une structure porteuse (6) s'y rattachant dans la direction radiale (5), dans lequel la structure porteuse (6) comporte des évidements (7, 8) séparés de la zone d'accouplement (3), et deux surfaces latérales (9, 10) de forme sensiblement annulaire, lesquelles sont écartées l'une de l'autre dans la direction axiale (11) par le biais de la structure porteuse (6), et dans lequel au moins une partie des évidements (7, 8), de préférence tous, ne s'ouvrent que vers une des surfaces latérales (9, 10) du corps porteur (1), **caractérisé en ce que** les évidements (7, 8) sur la surface latérale (9) vers laquelle s'ouvrent les évidements (7, 8) sont recouvert par une enveloppe (15) commune, de préférence de forme annulaire.

2. Corps porteur (1) selon la revendication 1, dans lequel les évidements (7, 8) s'ouvrent vers la même surface latérale (9) du corps porteur (1).

3. Corps porteur (1) selon la revendication 1 ou 2, dans lequel les évidements (7, 8) sur la surface latérale (10) opposée à la surface latérale (9) vers laquelle s'ouvrent les évidements (7, 8) sont fermés par une paroi latérale (12), laquelle est reliée d'une seule pièce à la structure porteuse (6).

4. Corps porteur (1) selon la revendication 3, dans lequel la paroi latérale (12) comporte dans la direction axiale (11) une épaisseur (13) de 0,3 % à 15 %, de préférence d'environ 10 %, de l'épaisseur (14) du corps porteur (1).

5. Corps porteur (1) selon l'une des revendications 1 à 4, dans lequel l'enveloppe (15) occupe une plus grande partie de la surface latérale (9) que les évidements (7, 8) et/ou l'enveloppe (15) est collée sur la surface latérale (9) vers laquelle s'ouvrent les évidements (7, 8), de préférence dans lequel un collage est situé à chaque endroit où l'enveloppe (15) est en contact avec la surface latérale (9).

6. Corps porteur (1) selon l'une des revendications 1 à 5, dans lequel la surface latérale (9) vers laquelle s'ouvrent les évidements (7, 8) comporte une cavité (16), laquelle comporte une forme correspondant à l'enveloppe (15), et l'enveloppe (15) est insérée dans la cavité (16) sensiblement sans intervalle.

7. Corps porteur (1) selon l'une des revendications 1 à 6, dans lequel l'enveloppe (15) comporte dans la direction axiale (11) une épaisseur (17) de 0,3% à 15%, de préférence d'environ 10 %, de l'épaisseur (14) du corps porteur (1).

8. Corps porteur (1) selon l'une des revendications 1 à 7, dans lequel les évidements (7, 8) sont au moins par zones, de préférence entièrement, remplis d'une matière de remplissage (18), de préférence de résine synthétique.

9. Corps porteur (1) selon l'une des revendications 1 à 8, dans lequel les évidements (7, 8) comportent une section transversale circulaire ou en forme de trou oblong dans un plan en coupe transversale (19) normal à l'axe de rotation (4).

10. Corps porteur (1) selon l'une des revendications 1 à 9, dans lequel les évidements (7, 8) occupent sur la surface latérale (9) vers laquelle s'ouvrent les évidements (7, 8) une surface totale de 50 % à 90 %, de préférence d'environ 75 %, de la surface latérale (9).

11. Corps porteur (1) selon l'une des revendications 1 à 10, dans lequel la zone d'accouplement (3) comporte un passage central (20), et de préférence des moyens (21, 22) de liaison fixe en rotation de l'outil abrasif ou coupant (2) à l'entraînement rotatif, dans lequel les moyens (21, 22) de liaison fixe en rotation sont disposés de manière adjacente au passage (20).

12. Corps porteur (1) selon l'une des revendications 1 à 11, dans lequel le corps porteur (1) comporte un diamètre (23) de 250 mm à 700 mm, de préférence d'environ 400 mm, et/ou une épaisseur (14) dans la direction axiale (11) de 20 mm à 300 mm, de préférence d'environ 30 mm.

13. Corps porteur (1) selon l'une des revendications 1 à 12, dans lequel le corps porteur (1) est réalisé de manière asymétrique par rapport à un plan médian (26) normal à l'axe de rotation (4).

14. Outil abrasif ou coupant (2) doté d'un corps porteur (1) selon l'une des revendications 1 à 13 et d'un moyen d'abrasion (24) disposé sur le corps porteur (1), de préférence dans lequel le corps porteur (1) comporte une surface périphérique (25) et le moyen d'abrasion (24) est disposé sur la surface périphérique (25) du corps porteur (1) sous la forme d'un revêtement abrasif.
